# EUROPEAN PATENT APPLICATION

(11) **EP 4 357 974 A1**
(43) Date of publication of application: **24.04.2024**
(21) Application number: 22878685.1
(22) Date of filing: 25.07.2022
(51) Int. Cl.: G06N 3/04, G06N 3/08

(54) **ELECTRONIC DEVICE AND CONTROL METHOD FOR ELECTRONIC DEVICE**

(30) Priority: 08.10.2021 KR 20210133895
(71) Applicant: Samsung Electronics Co., Ltd., Suwon-si, Gyeonggi-do 16677 (KR)
(72) Inventor: KANG, Minyoung, Suwon-si Gyeonggi-do 16677 (KR); KIM, Sunah, Suwon-si Gyeonggi-do 16677 (KR); JO, Donghyun, Suwon-si Gyeonggi-do 16677 (KR); SEO, Seonguk, Suwon-si Gyeonggi-do 16677 (KR); LEE, Hyobin, Suwon-si Gyeonggi-do 16677 (KR); HA, Jihye, Suwon-si Gyeonggi-do 16677 (KR)
(74) Representative: Gulde & Partner
(86) International application number: PCT/KR2022/010888
(87) International publication number: WO 2023/058862

(57) **Abstract**

Disclosed are an electronic device and a method for controlling the electronic device. The electronic device includes: a memory; and a processor configured to obtain prediction information on the content by inputting at least one attribute for content to a first neural network model, and the processor may be configured to: based on obtaining a plurality of attribute values for the content, identify a first attribute value among the plurality of attribute values, obtain a second attribute value corresponding to the first attribute value by inputting, to a second neural network model, at least one relevant attribute value related to the first attribute value among the plurality of attribute values, based on similarity between the first attribute value and the second attribute value being greater than or equal to a first threshold value, obtain prediction information for the content by inputting one or more attribute values other than the first attribute value among the plurality of values and the second attribute value to the first neural network model, and train the second neural network model based on the obtained prediction information.

## Description

### [Technical Field]

The disclosure relates to an electronic device and a method for controlling the electronic device, and for example, to an electronic device capable of providing prediction information for content and a controlling method thereof.

### [Background Art]

Recently, a user may be provided with a large amount of content through various types of digital platforms due to the development of technologies for wireless communication and a portable terminal. Technologies for obtaining prediction information (for example, information on a recommended movie, information on a rating of a movie, information on a click rate of a user with respect to an advertisement, etc.) on the basis of an attribute value representing an attribute of the content, and improving satisfaction of a user based on the obtained prediction information have been developed.

According to the prior art, when obtaining prediction information on the content using a trained neural network model, the attribute value of the content included in the learning data may be converted into an embedding vector corresponding thereto and may be input into a neural network model, but the attribute value of the content not included in the learning data may be converted into a zero vector or a random vector and may be input into a neural network model. In this example, since the neural network model obtains prediction information on the content using a vector that is not trained with a trained weight, there is a problem that it is difficult to exert a high performance.

### [Disclosure]

### [Technical Solution]

Embodiments of the disclosure address the problems of the prior art as described above, and provide an electronic device capable of preventing and/or reducing performance degradation of a neural network model by generating an attribute value capable of replacing an attribute value even when an attribute value of content not used for learning of a neural network model is inputted, and a controlling method thereof.

According to an example embodiment, the electronic device includes: a memory; and a processor configured to: obtain prediction information on the content by inputting at least one attribute for content to a first neural network model, based on obtaining a plurality of attribute values for the content, identify a first attribute value among the plurality of attribute values, obtain a second attribute value corresponding to the first attribute value by inputting, to a second neural network model, at least one relevant attribute value related to the first attribute value among the plurality of attribute values, based on similarity between the first attribute value and the second attribute value being greater than or equal to a first threshold value, obtain prediction information for the content by inputting one or more attribute values other than the first attribute value among the plurality of values and the second attribute value to the first neural network model, and train the second neural network model based on the obtained prediction information.

The processor may be configured to: obtain a loss value by comprising the prediction information obtained through the first neural network model with label information corresponding to the plurality of attribute values, and train the second neural network model based on the loss value, and training of the first neural network model may be stopped while the second neural network model is being trained.

The processor may be configured to: based on similarity between the first attribute value and the second attribute value being less than the first threshold value, obtain prediction information for the content by inputting the plurality of attribute values including the first attribute value to the first neural network model.

The processor may be configured to: based on at least one of information about a correlation between the plurality of attribute values and information about distribution of each of the plurality of attribute values, identify the at least one relevant attribute value related to the first attribute value among the plurality of attribute values.

The processor may be configured to: obtain first test values corresponding to the first attribute value by inputting, to the second neural network model, each of remaining attribute values except the first attribute value among the plurality of attribute values, identify first test values having similarity that is greater than a specified second threshold value among the first test values, identify attribute values corresponding to first test values having similarity with the first attribute value greater than or equal to a specified second threshold value as candidate attribute values to identify the relevant attribute value, and identify the at least one relevant attribute value related to the first attribute value based on the identified candidate attribute values.

The processor may be configured to: obtain second test values corresponding to the first attribute value by inputting, to the second neural network model, each of the combinations of the identified candidate attribute values, identify second test values having similarity with the first attribute value greater than a specified third threshold value among the second test values, identify combinations corresponding to second test values having similarity with the first attribute value greater than or equal to a specified third threshold value as candidate attribute values to identify the relevant attribute value, and identify attribute values included in a combination in which similarity between the second test values and the first attribute value is the highest among the identified candidate combinations as the at least one relevant attribute value related to the first attribute value.

The processor may be configured to: based on obtaining the plurality of attribute values for the content, identify the first attribute value and the third attribute value among the plurality of attribute values, obtain a fourth attribute value corresponding to the third attribute value by inputting at least one relevant attribute value related to the third attribute value, among the plurality of attribute values, to the second neural network model, and based on similarity between the third attribute value and the fourth attribute value being greater than or equal to a specified fourth threshold value, obtain prediction information for the content by inputting one or more attribute values other than the first attribute value and the third attribute value among the plurality of attribute values, the second attribute value, and the fourth attribute value to the first neural network model.

The electronic device may further include an inputter comprising input circuitry; and an outputter comprising output circuitry, and the processor may be configured to: control the outputter to provide the obtained prediction information, receive a user feedback for the prediction information through the inputter, and train the second neural network model based on the received user feedback.

The first attribute value may be an attribute value not included in learning data for learning of the first neural network or an attribute value having frequency included in the learning data less than a specified fifth threshold value.

According to an example embodiment, a method of controlling an electronic device includes: based on obtaining a plurality of attribute values for content, identifying a first attribute value among the plurality of attribute values; obtaining a second attribute value corresponding to the first attribute value by inputting, to a second neural network model, at least one relevant attribute value related to the first attribute value among the plurality of attribute values; based on similarity between the first attribute value and the second attribute value being greater than or equal to a first threshold value, obtaining prediction information for the content by inputting one or more attribute values other than the first attribute value among the plurality of values and the second attribute value to the first neural network model; and training the second neural network model based on the obtained prediction information.

The training the second neural network model may include: obtaining a loss value by comprising the prediction information obtained through the first neural network model with label information corresponding to the plurality of attribute values; and training the second neural network model based on the loss value, and training of the first neural network model may be stopped while the second neural network model is being trained.

The obtaining prediction information for the content may include: based on similarity between the first attribute value and the second attribute value being less than the first threshold value, obtaining prediction information for the content by inputting the plurality of attribute values including the first attribute value to the first neural network model.

The obtaining a second attribute value corresponding to the first attribute may include: based on at least one of information about a correlation between the plurality of attribute values and information about distribution of each of the plurality of attribute values, identifying the at least one relevant attribute value related to the first attribute value among the plurality of attribute values.

The identifying the at least one relevant attribute value may include: obtaining first test values corresponding to the first attribute value by inputting, to the second neural network model, each of remaining attribute values except the first attribute value among the plurality of attribute values; identifying first test values having similarity that is greater than a specified second threshold value among the first test values; identifying attribute values corresponding to first test values having similarity with the first attribute value greater than or equal to a specified second threshold value as candidate attribute values to identify the relevant attribute value; and identifying the at least one relevant attribute value related to the first attribute value based on the identified candidate attribute values.

The identifying the at least one relevant attribute value may include: obtaining second test values corresponding to the first attribute value by inputting, to the second neural network model, each of the combinations of the identified candidate attribute values; identifying second test values having similarity with the first attribute value greater than a specified third threshold value among the second test values; identifying combinations corresponding to second test values having similarity with the first attribute value greater than or equal to a specified third threshold value as candidate attribute values to identify the relevant attribute value; and identifying attribute values included in a combination in which similarity between the second test values and the first attribute value is the highest among the identified candidate combinations as the at least one relevant attribute value related to the first attribute value.

The method may include: based on obtaining the plurality of attribute values for the content, identifying the first attribute value and the third attribute value among the plurality of attribute values, obtaining a fourth attribute value corresponding to the third attribute value by inputting at least one relevant attribute value related to the third attribute value, among the plurality of attribute values, to the second neural network model, and based on similarity between the third attribute value and the fourth attribute value being greater than or equal to a specified fourth threshold value, obtaining prediction information for the content by inputting one or more attribute values other than the first attribute value and the third attribute value among the plurality of attribute values, the second attribute value, and the fourth attribute value to the first neural network model.

The method may further include: providing the obtained prediction information, receiving a user feedback for the prediction information through the inputter, and training the second neural network model based on the received user feedback.

The first attribute value may be an attribute value not included in learning data for learning of the first neural network or an attribute value having frequency included in the learning data less than a specified fifth threshold value.

According to an example embodiment, a non-transitory computer-readable recording medium having recorded thereon a program which, when executed by a processor of an electronic device, causes the electronic device to perform operations including: based on obtaining a plurality of attribute values for content, identifying a first attribute value among the plurality of attribute values; obtaining a second attribute value corresponding to the first attribute value by inputting, to a second neural network model, at least one relevant attribute value related to the first attribute value among the plurality of attribute values; based on similarity between the first attribute value and the second attribute value being greater than or equal to a first threshold value, obtaining prediction information for the content by inputting one or more attribute values other than the first attribute value among the plurality of values and the second attribute value to the first neural network model; and training the second neural network model based on the obtained prediction information.

### [Description of Drawings]

FIG. 1 is a flowchart illustrating an example method of controlling an electronic device according to various embodiments;
FIG. 2 is a diagram illustrating an example of a plurality of attribute values according to various embodiments;
FIGS. 3 and 4 are flowcharts illustrating an exmaple process of obtaining a relevant attribute value associated with a first attribute value in detail according to various embodiments;
FIG. 5 is a block diagram illustrating an example configuration of an electronic device according to various embodiments;
FIG. 6 is a diagram illustrating an example configuration of a neural network model and a plurality of modules according to various embodiments; and
FIG. 7 is a block diagram illustrating an example configuration of an electronic device according to an various embodiments.

### [Best Mode]

Hereinafter, various example embodiments of the disclosure will be described with reference to the accompanying drawings. However, it may be understood that the disclosure is not limited to the example embodiments described hereinafter, but also includes various modifications, equivalents, and/or alternatives of the various example embodiments of the disclosure. In relation to explanation of the drawings, similar drawing reference numerals may be used for similar elements.

When it is decided that a detailed description for the known art related to the disclosure may unnecessarily obscure the gist of the disclosure, the detailed description may be shortened or omitted.

In addition, the following example embodiments may be modified in many different forms, and the scope of the technical spirit of the disclosure is not limited to the following examples.

The terms used herein are to describe certain embodiments and are not intended to limit the scope of claims. A singular expression includes a plural expression unless otherwise specified.

In this disclosure, the expressions "have," "may have," "include," or "may include" or the like represent presence of a corresponding feature (for example: components such as numbers, functions, operations, or parts) and does not exclude the presence of additional feature.

In this disclosure, expressions such as "at least one of A [and/or] B," or "one or more of A [and/or] B," include all possible combinations of the listed items. For example, "at least one of A and B," or "at least one of A or B" includes any of (1) at least one A, (2) at least one B, or (3) at least one A and at least one B.

As used herein, the terms "first," "second," or the like may denote various components, regardless of order and/or importance, and may be used to distinguish one component from another, and does not limit the components.

If it is described that a certain element (e.g., first element) is "operatively or communicatively coupled with/to" or is "connected to" another element (e.g., second element), it should be understood that the certain element may be connected to the other element directly or through still another element (e.g., third element).

On the other hand, if it is described that a certain element (e.g., first element) is "directly coupled to" or "directly connected to" another element (e.g., second element), it may be understood that there is no element (e.g., third element) between the certain element and the another element.

The expression "configured to" used in the disclosure may be interchangeably used with other expressions such as "suitable for," "having the capacity to," "designed to," "adapted to," "made to," and "capable of," depending on cases. Meanwhile, the term "configured to" does not necessarily mean that a device is "specifically designed to" in terms of hardware.

Under some circumstances, the expression "a device configured to" may refer, for example, to the device being "capable of" performing an operation together with another device or component. For example, the phrase "a processor configured to perform A, B, and C" may refer, for example, to a dedicated processor (e.g., an embedded processor) for performing the corresponding operations, or a generic-purpose processor (e.g., a central processing unit (CPU) or an application processor) that can perform the corresponding operations by executing one or more software programs stored in a memory device.

Terms such as "module," "unit," "part," and so on are used to refer to an element that performs at least one function or operation, and such element may be implemented as hardware or software, or a combination of hardware and software. Further, except for when each of a plurality of "modules," "units," "parts," and the like needs to be realized in an individual hardware, the components may be integrated in at least one module or chip and be realized in at least one processor.

It is understood that various elements and regions in the figures may be shown out of scale. Accordingly, the scope of the disclosure is not limited by the relative sizes or spacing drawn from the accompanying drawings.

Various example embodiments of the disclosure will be described in greater detail below with reference to the accompanying drawings to aid in the understanding of those of ordinary skill in the art.

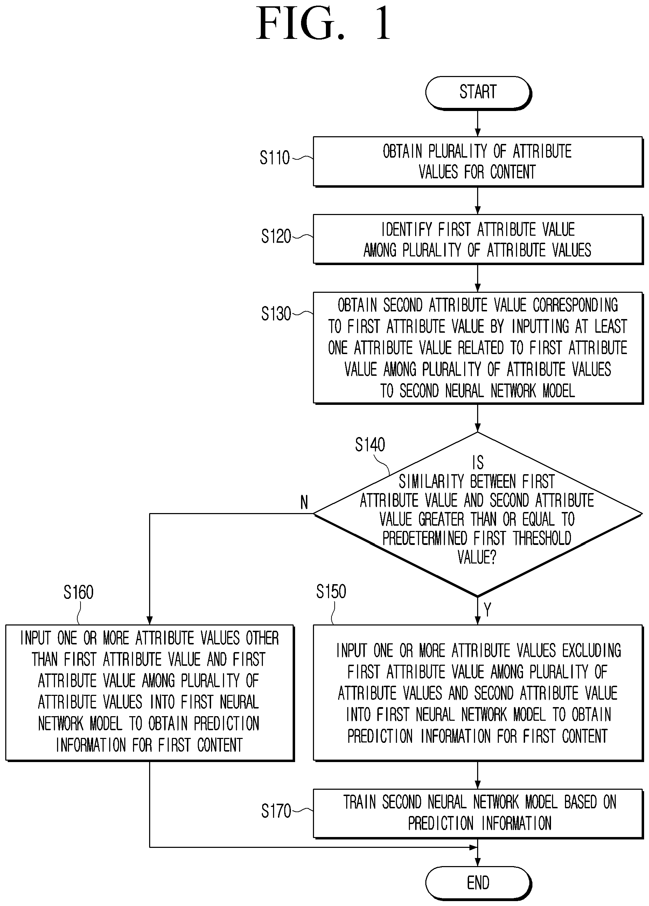

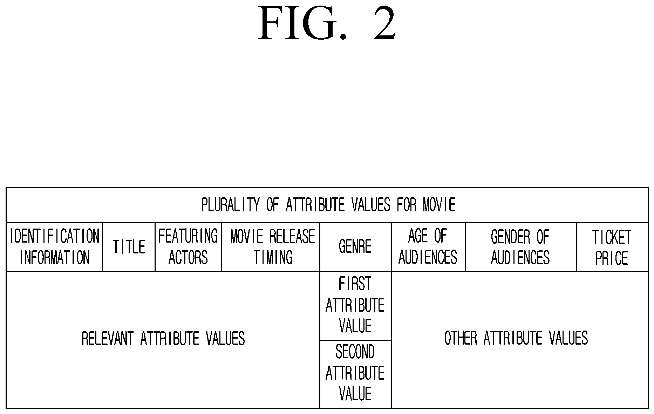

FIG. 1 is a flowchart illustrating an example method of controlling an electronic device 100 according to various embodiments. FIG. 2 is a diagram illustrating an example of a plurality of attribute values according to various embodiments.

After briefly describing terms related to the disclosure, various embodiments according to the disclosure will be described in greater detail with reference to FIGS. 1 and 2.

An "electronic device 100" according to the disclosure may refer, for example, to a device capable of providing prediction information for content using a neural network model. For example, the electronic device 100 may obtain prediction information on the content by inputting at least one attribute value for the content into the neural network model according to the disclosure, and may provide the obtained prediction information. The electronic device 100 according to the disclosure may be implemented as a server, but a type of the electronic device 100 is not particularly limited.

In the disclosure, "content" may refer, for example, to a variety of digital information provided through the electronic device 100. The content may include content of a type such as a digitally processed TV program, a movie, a game, and an advertisement, and may include voice content without being limited to video content.

The "attribute value about content" may refer, for example, to a value indicating an attribute with respect to convent. The attribute of content includes a plurality of attributes in different types and each of a plurality of attributes of different types may be represented as a numeral attribute value such as a vector, a matrix, or a tensor that may be processed by the electronic device 100 and a neural network model. An example of the attribute values with respect to the content will be described with reference to FIG. 2.

"Prediction information" may refer, for example, to information related to content that may be predicted based on an attribute value for the content. For example, if the content is movie, the prediction information may be information on a recommendation movie that may be predicted based on the attribute of the movie, and may be rating information for the movie. If the content is an advertisement, the prediction information may be information indicating a click rate of a user for the advertisement, that is, predicted click-through data rate (pCTR) information. The information that may be predicted based on the attribute value of the content may also correspond to the prediction information according to the disclosure.

The "neural network model" according to the disclosure may refer, for example, to an artificial intelligence model including a neural network, and may be trained by deep learning. The neural network model may be of a type such as an object recognition model, an automatic speech recognition model, and a speech synthesis model, but the neural network model according to the disclosure is not limited to the above example.

The type of neural network included in the neural network model according to the disclosure is not limited to a specific type. The neural network model according to the disclosure may include various types of neural networks, such as a deep neural network (DNN), a convolutional neural network (CNN), a recurrent neural network (RNN), and a generative adversarial networks (GAN), or the like. The neural network model according to the disclosure may be embodied in the form of an on-device included in the electronic device 100, and may be included in an external device connected to the electronic device 100.

The neural network model according to the disclosure may include a first neural network model and a second neural network model. Although the first neural network model and the second neural network model may be implemented as one integrated neural network model, it is assumed that the first neural network model and the second neural network model are implemented as separate neural network models. The first neural network model and the second neural network model will be described in more detail with reference to FIGS. 1 and 2.

As shown in FIG. 1, the electronic device 100 may obtain a plurality of attribute values for the contents in operation S 110. Referring to the example of FIG. 2, when the content is a movie, the plurality of attribute values for the content may include identification information, a title, featuring actors, movie release timing, genre, age of audiences, gender of audiences, ticket price, or the like. The identification information may refer to a unique value assigned to distinguish each movie from another movie.

Based on a plurality of attribute values with respect to content being obtained, the electronic device 100 may identify a first attribute value among a plurality of attribute values in operation S120.

"The first neural network model" may refer, for example, to a neural network model trained to output prediction information with respect to content based on at least one attribute value with respect to content. The first neural network model may output prediction information with respect to content based on one or at least two attribute values with respect to content. The first neural network model may be referred to as a term "baseline model" in that the model is to obtain prediction information provided according to the disclosure.

For example, if content is a movie, the first neural network model may output information about a recommended movie based on an attribute value representing an input genre of a movie. The first neural network model may output information about a recommended movie based on a plurality of attribute values such as attribute values related to identification information of a movie, a title, featuring actors, movie release timing, genre, age of audiences, gender of audiences, ticket price, or the like. The type and number of attribute values input to the first neural network model and which type of prediction information the first neural network model will output may be different according to a design of the first neural network model.

The "first attribute value" is a term specifying one attribute value not used for learning of the first neural network model among a plurality of attribute values. The first attribute value refers to an attribute value not used for learning of the first neural network model among a plurality of attribute values used in obtaining prediction information about content through the first neural network model.

One attribute value "not used" for the learning of the first neural network model may indicate an attribute value that is not included in the learning data for training of the first neural network model. According to an embodiment, the attribute may be included in the learning data for training of the first neural network model, but the attribute value with low frequency may be included in an attribute value that is not used for training of the first neural network model. Where the frequency included in the learning data is less may indicate that the frequency included in the learning data is less than a predetermined threshold value. The term first attribute value may be replayed with "non-learning attribute value".

Referring to the example of FIG. 2, an attribute value not used for learning of the first neural network model among a plurality of attribute values including identification information, a title, featuring actors, movie release timing, genre, age of audiences, gender of audiences, ticket price, or the like, may be genre.

Based on the first attribute value being identified, the electronic device 100 may obtain a second attribute value corresponding to the first attribute value by inputting at least one attribute value related to the first attribute value among a plurality of attribute values to the second neural network model in operation S 130.

The "second neural network model" may refer, for example, to a neural network model trained to obtain another type of attribute value based on a specific type of attribute value. The second neural network model may output a second attribute value corresponding to a first attribute value based on at least one relevant attribute value. The second neural network model may be referred to as a "meta-embedding model" in that it is a model for generating a second attribute value for replacing the first attribute value based on the relevant attribute value.

"The relevant attribute value" may refer, for example, to another attribute value having a high relevance with a particular attribute value, and is an input of the second neural network model is input.

The "second attribute value" may refer, for example, to a new attribute value obtained by the second neural network model based on the at least one relevant attribute value, and an attribute value having the same type as the first attribute value, but a different value. For example, the second attribute value may be the attribute value for the genre of the movie, similar to the first attribute value, but the value representing the genre may be different. The term second attribute value may be referred to as the term "alternative attribute value" in that the second attribute value is an attribute value that may be input to the first neural network model by replacing the first attribute value.

Referring to the example of FIG. 2, when the genre of the movie is identified as the first attribute value, the attribute value for the identification information, the title, the featuring actors, and the movie release timing may be included in a relevant attribute value related to the genre of the movie, and the second neural network model may output a second attribute value for the genre of the movie based on the identification information, the title, the featuring actors, and the movie release timing. The age of audiences, the gender of audiences, and ticket price may not be included in the relevant attribute values related to the genre of the movie, referring to FIG. 2, the information which is input to the first neural network model as it is helpful to obtain prediction information, but is not included in the relevant attribute is referred to as "other attribute values."

The relevance between the first attribute value and the other attribute values of the plurality of attribute values may be different from each other, and thus, it is necessary to obtain a second attribute value for replacing the first attribute value based on the attribute values with high relevance with the first attribute value. The process of identifying at least one relevant attribute value related to the first attribute value may be implemented through the following examples.

According to an embodiment, the electronic device 100 may identify at least one relevant attribute value related to the first attribute value among a plurality of attribute values based on at least one of information on correlation among a plurality of attribute values or information on distribution of each of the plurality of attribute values.

The electronic device 100 may identify attribute values having high correlation with a first attribute value among a plurality of attribute values, identify an attribute value having similar data distribution with the first attribute value among the attribute values having high correlation with the first attribute value, thereby identifying at least one relevant attribute value related to a first attribute value of the plurality of attribute values.

For example, the electronic device 100 may identify attribute values for each of the title, the featuring actors, the movie release timing time, and the ticket price as an attribute value having a high correlation with the genre among the plurality of attribute values according to the example of FIG. 2. The electronic device 100 may identify attribute values for each of the title, the featuring actors, the movie release timing, age of audiences, respectively, as an attribute value having similar data distribution with the genre among the plurality of attribute values according to the example of FIG. 2. In this example, the electronic device 100 may identify attribute values for each of the title, the featuring actors, the movie release timing, and the genre, which are attribute values having high correlation and similar data distribution with the first attribute value, among the plurality of attribute values, as at least one relevant attribute value related to the first attribute value.

According to an embodiment, the electronic device 100 may identify at least one relevant attribute value related to the first attribute value by performing a test process for the plurality of attribute values using the second neural network model. The "test process" may refer, for example, to a process of identifying optimal attribute values having high relevance with a first attribute value based on a combination of a plurality of attribute values, and may be referred to as a learning process for obtaining a relevant attribute value in that the optimal attribute values are updated while a repeated process is performed on each of a plurality of attribute values and a combination of the attribute values.

The electronic device 100 may input each of the remaining attribute values other than the first attribute value among the plurality of attribute values into a second neural network model to obtain first test values corresponding to the first attribute value. Here, the term "first test value" is intended to refer to attribute values that are temporarily obtained as attribute values are input into a second neural network model while identifying a relevant attribute value.

When the first test values are obtained, the electronic device 100 may identify first test values that are equal to or greater than a predetermined second threshold value among the first test values. The electronic device 100 may identify attribute values corresponding to the first test values that are equal to or greater than a preset second threshold value as candidate attribute values for identifying the relevant attribute values. The term "candidate attribute value" may be used as a term for specifying a result of primarily selecting attribute values having high relevance with a first attribute value among the remaining attribute values other than the first attribute value.

When the candidate attribute values are identified, the electronic device 100 may identify at least one relevant attribute value related to the first attribute value based on the identified candidate attribute values. For example, the electronic device 100 may identify each of the attribute values identified as the candidate attribute values as at least one relevant attribute value related to the first attribute value, but may identify an optimal combination among the combinations of the identified candidate attribute values, as described below.

For example, each of the combinations of the identified candidate attribute values may be input to a second neural network model to obtain second test values corresponding to the first attribute value. The term "second test value" may refer, for example, to attribute values that are temporarily obtained as a combination of candidate attribute values is input into a second neural network model while identifying a relevant attribute value.

When the second test values are obtained, the electronic device 100 may identify combinations corresponding to the second test values having a similarity with the first attribute value that is greater than or equal to a preset third threshold value as candidate combinations for identifying the relevant attribute value. The electronic device 100 may identify attribute values included in a combination having the highest similarity with the first attribute value with second test values corresponding to the candidate combinations among the identified candidate combinations as at least one relevant attribute value related to the first attribute value. The term "candidate combination" may be used as a term for specifying a result of secondarily selecting attribute values having high relevance with a first attribute value among combinations of the identified candidate attribute values.

When a second attribute value corresponding to the first attribute value is obtained through the second neural network model as described above, the electronic device 100 may verify the second attribute value by comparing the first attribute value with the second attribute value, and may determine whether to input the attribute value to the first neural network model according to the verification result.

For example, if the similarity between the first attribute value and the second attribute value is greater than or equal to a predetermined first threshold value in operation S140-Y, the electronic device 100 may input one or more attribute values excluding the first attribute value among the plurality of attribute values and the second attribute value into the first neural network model to obtain prediction information for the content in operation S150. If the second attribute value newly generated through the second neural network model is similar to the existing first attribute value, the electronic device 100 may replace the first attribute value with the second attribute value to use the second attribute value as an input of the first neural network model. In this example, one or more attribute values other than the first attribute value among the plurality of attribute values may be input together with the second attribute value in the first neural network model. The number of one or more attribute values other than the first attribute value may vary depending on the design of the first neural network model, as described above.

If the similarity between the first attribute value and the second attribute value is less than the first threshold value in operation S140-N, the electronic device 100 may input one or more attribute values other than the first attribute value and the first attribute value into the first neural network model to obtain prediction information for the content in operation S 160. That is, if the second attribute value newly obtained through the second neural network model is not similar to the existing first attribute value, the existing first attribute value, which is not the newly generated second attribute value, may be used as an input of the first neural network model. In this example, one or more attribute values other than the first attribute value among the plurality of attribute values may be input to the first neural network model together with the first attribute value.

When the second attribute value is obtained according to the example of FIG. 2, if the similarity between the first attribute value and the second attribute value is greater than or equal to the first threshold value, the electronic device 100 may obtain prediction information about the content by inputting attribute values for the identification information, the title, the featuring actors, the movie release timing, age of audiences, gender of audiences, and a ticket price to the first neural network model together with the second attribute value generated through the second neural network model. If the similarity between the first attribute value and the second attribute value is greater than or equal to the first threshold value, the electronic device 100 may obtain prediction information about the content by inputting attribute values for the identification information, the title, the featuring actors, the movie release timing, age of audiences, gender of audiences, and a ticket price to the first neural network model, along with the first attribute value that is not the second attribute value generated through the second neural network model.

If the similarity between the first attribute value and the second attribute value is less than the first threshold value in operation S140-N, the electronic device 100 may repeat the operations of the disclosure as described above, based on other attribute values, without inputting a plurality of attribute values including the first attribute value to the first neural network model. If the similarity between the first attribute value and the second attribute value is less than the first threshold value, the second attribute value may not be used for inference of the first neural network model and learning of the second neural network model, as it appears that the second attribute value is not sufficient for replacing the first attribute value.

The "similarity" of the disclosure may be calculated based on a distance between vectors corresponding to each of the attribute values. For example, the similarity between attribute values may be calculated based on various similarity techniques, such as cosine similarity, Euclidean similarity, or Jaccard similarity. The "first threshold value" for the similarity may be changed by setting of a developer or a user, which is similar to the "second threshold value", "third threshold value", and "fourth threshold value" as described below. Depending on the embodiment, two or more threshold values among the first threshold value, the second threshold value, the third threshold value, and the fourth threshold value may be set to be the same.

When the prediction information for the content is obtained according to an embodiment as described above, the electronic device 100 may provide prediction information for the content. For example, the electronic device 100 may display prediction information on the content through the display of the electronic device 100, and may allow the prediction information on the content to be displayed on the external device by transmitting prediction information on the content to the external device.

When the prediction information is obtained by the first neural network model using the second attribute value obtained through the second neural network model in operation S 150, the electronic device 100 may train the second neural network model based on the prediction information obtained through the first neural network model in operation S 170.

The electronic device 100 may obtain a loss value by comparing the prediction information obtained through the first neural network model with label information corresponding to the plurality of attribute values, and may train the second neural network model based on the obtained loss value. In other words, the electronic device 100 may obtain a second attribute value that is a new attribute value through the second neural network model, obtain prediction information based on the attribute values including the second attribute value through the first neural network model, and train the second neural network model based on the prediction information.

The electronic device 100 may train the second neural network model based on user feedback for the prediction information obtained through the first neural network model. The electronic device 100 may provide prediction information obtained through the first neural network model and may receive positive feedback or negative feedback of the user for the prediction information. When the user's positive feedback is received, the electronic device 100 may increase a score for the prediction information and decrease the score for the prediction information when negative feedback of the user is received, and may train the second neural network model based on the score reflecting the feedback of the user.

While the second neural network model is trained, the learning of the first neural network model may be stopped. The electronic device 100 may lock the weights of the first neural network model prior to initiating the learning of the second neural network model and may perform learning of the second neural network model. The process of obtaining prediction information through the first neural network model in the process of training the second neural network model is performed, but in this case, the first neural network model is not trained and thus the weight of the first neural network model may be maintained. This is to prevent and/or reduce the performance of the trained first neural network model from being changed by the attribute value generated by the second neural network model.

As an example, the electronic device 100 may perform a back propagation process based on a loss value according to the prediction information to train the second neural network model according to a gradient descent that reduces a gradient of an activation function for each layer. There is no specific limitation to a specific learning method of the second neural network model.

As described above, the number and type of attribute values input to the first neural network model may vary depending on the implementation example of the first neural network model. For example, the number and type of attribute values input to the first neural network model may be defined by a developer or a user, and may be determined according to a learning result of the first neural network model. For example, if the content is a movie, the attribute value input to the first neural network may be attribute values for the identification information, the title, the featuring actors, movie release timing, genre, age of audiences, gender of audiences, and ticket price, but if higher performance is expected when inputting only the attribute values for the learning result identification information, title, and genre, the attribute values may be limited to the attribute values with respect to the identification information, title, and genre.

The neural network model may perform a process of identifying whether only an attribute value of a type which is pre-defined as having high importance, among a plurality of attribute values, is used for the learning of the first neural network model, and may perform a process of generating an attribute value by inputting a relevant attribute value related to the identified attribute value to the second neural network model.

The attribute values not used for learning of the first neural network model of the plurality of attribute values may be at least two. For example, the attribute value that is not used for learning of the first neural network model of the plurality of attribute values may be two of the first attribute value and the third attribute value, and in this case, the electronic device 100 may perform the steps of controlling the first attribute value for the third attribute value as well. The electronic device 100 may input at least one attribute value related to the third attribute value among the plurality of attribute values to the second neural network model to obtain a fourth attribute value corresponding to the third attribute value, and if the similarity between the third attribute value and the fourth attribute value is greater than or equal to a preset fourth threshold value, input one or more attribute values, the second attribute value, and the fourth attribute value other than the first attribute value and the third attribute value among the plurality of attribute values to the first neural network model to obtain prediction information for the content.

The "third attribute value" may refer, for example, to an attribute value that is not used for learning of the first neural network model among a plurality of attribute values used in obtaining prediction information about the content through the first neural network model like the first attribute value, and the "fourth attribute value" may refer, for example, to an attribute value obtained by the second neural network model based on the relevant attribute value, and refers to an attribute having the same type as the third attribute value but a different value.

It has been described that the neural network model capable of obtaining prediction information for the content is implemented as one of the first neural network model, and a neural network model capable of obtaining other types of attribute values based on a specific type of attribute value is implemented as one of the second neural network models. However, according to an embodiment, the first neural network model may be implemented in a plurality of types according to the type of the prediction information for the content and the type of the input attribute values, and the second neural network model may also be implemented in plural according to the type of the generated attribute value and the type of the input attribute values.

It has been described that the first neural network model obtains prediction information on the content based on the plurality of attribute values for the content, and the disclosure may be applied to an example where the first neural network model obtains another feature value other than the prediction information on the basis of the plurality of attribute values for the content.

According to an embodiment as described above, the electronic device 100 may minimize and/or reduce the performance degradation of the first neural network model by generating an attribute value that may replace the attribute value through the second neural network model even if the attribute value to be input to the first neural network model for obtaining prediction information for the content is not used for learning of the first neural network model. The problem of cold-start, which may occur when the amount of learning data is insufficient in the prediction/recommendation system, may be solved.

The electronic device 100 may obtain prediction information by inputting the attribute value generated through the second neural network model into the first neural network model, and train the second neural network model on the basis of the prediction information, and the second neural network model may be trained in a direction for improving the performance of the first neural network model, rather than generating an attribute value similar to an attribute value that is not sufficiently trained.

When the attribute value is obtained through the second neural network model, the electronic device 100 may perform a verification process of comparing the attribute value with the original attribute value, and may then input the attribute value to the first neural network model, thereby preventing/reducing performance degradation of the first neural network model as the attribute value having a large difference with the original attribute value is input.

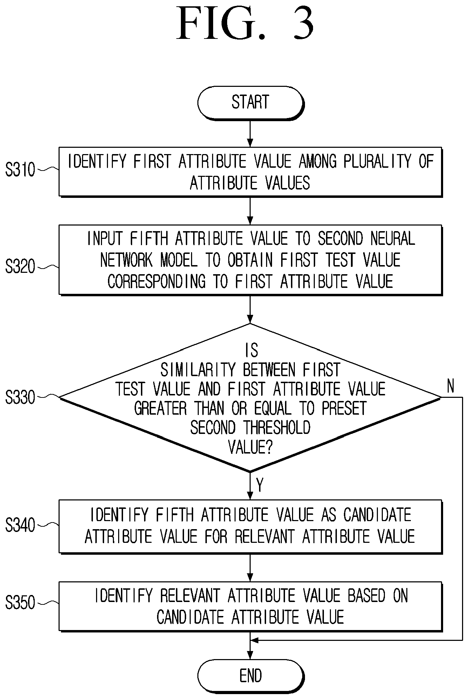

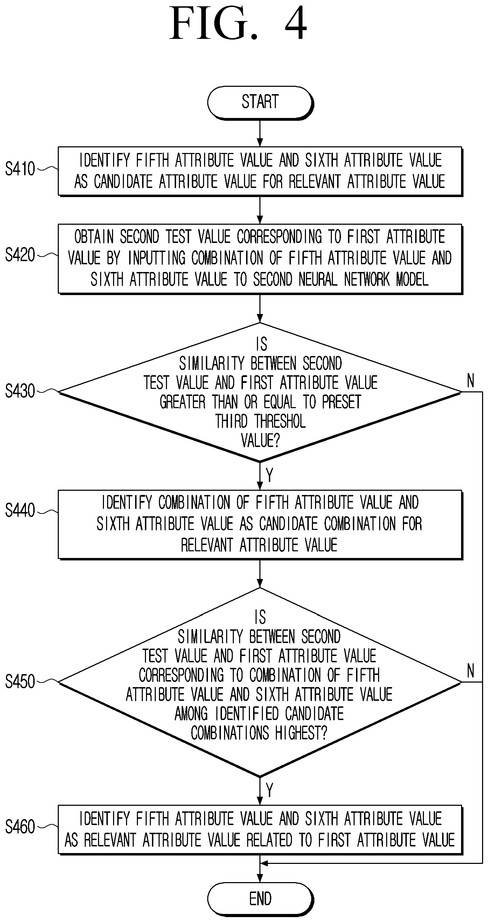

FIGS. 3 and 4 are flowcharts illustrating an example process of obtaining a relevant attribute value associated with a first attribute value in detail according to various embodiments.

As described above, the electronic device 100 may identify at least one relevant attribute value related to the first attribute value by performing a test process for the plurality of attribute values using the second neural network model. Referring to FIGS. 1 and 2, a test process, a first test value, a second test value, a candidate attribute value, and a candidate combination have been described, and hereinbelow, a test process according to the disclosure will be described by limiting a fifth attribute value and a sixth attribute value among a plurality of attribute values.

As shown in FIG. 3, the electronic device 100 may identify a first attribute value among a plurality of attribute values in operation S310. Referring to FIGS. 3 and 4, a case where a first attribute value among a plurality of attribute values is not used for learning of a first neural network model is described as an example.

The electronic device 100 may input a fifth attribute value to the second neural network model to obtain a first test value corresponding to the first attribute value in operation S320. The "fifth attribute value" may refer, for example, to an attribute value that is not used for learning of the first neural network model among a plurality of attribute values used in obtaining prediction information about the contents through the first neural network model like the first attribute value and the third attribute value, and the "sixth attribute value" has the same or similar meaning.

When the first test value is obtained, the electronic device 100 may identify whether the similarity between the first test value and the first attribute value is greater than or equal to a preset second threshold value in operation S330. As a result of the identification, if the similarity between the first test value and the first attribute value is greater than or equal to a predetermined second threshold value, the electronic device 100 may identify the fifth attribute value as a first candidate attribute value for the relevant attribute value.

If the similarity between the first test value and the first attribute value is less than a preset second threshold value as a result of identification in operation S330-N, the electronic device 100 may not identify the fifth attribute value as a candidate attribute value for the relevant attribute value. If the similarity between the first test value and the first attribute value is less than a predetermined second threshold value as a result of identification in operation S330-Y, the electronic device 100 may identify the fifth attribute value as a candidate attribute value for the relevant attribute value in operation S340. The electronic device 100 may identify a relevant attribute value based on the candidate attribute value. The identifying the relevant attribute value based on the candidate attribute value may include identifying each of the candidate attribute values including the fifth attribute value as a relevant attribute value, and identifying an optimal combination of the combinations of the candidate attribute values including the fifth attribute value as described with reference to FIG. 4 to identify a relevant attribute value.

Although the process of identifying whether the fifth attribute value is included in the candidate attribute value for the relevant attribute value has been described with reference to FIG. 3, the process of FIG. 3 may be performed similarly to other attribute values other than the fifth attribute value among the plurality of attribute values. As illustrated in FIG. 4, the electronic device 100 may identify the fifth attribute value and the sixth attribute value as a candidate attribute value for a relevant attribute value in operation S410.

Based on the fifth attribute value and the sixth attribute value being identified as a candidate attribute value, the electronic device 100 may obtain a second test value corresponding to the first attribute value by inputting the combination of the fifth attribute value and the sixth attribute value to the second neural network model in operation S420. The electronic device 100 may identify whether similarity between the second test value and the first attribute value is greater than or equal to a preset third threshold value in operation S430.

As a result of identification, if the similarity between the second test value and the first attribute value is less than a preset third threshold value in operation S430-N, the electronic device 100 may not identify the combination of the fifth attribute value and the sixth attribute value as a candidate combination for the relevant attribute value.

As a result of identification, if the similarity between the second test value and the first attribute value is greater than or equal to a preset third threshold value in operation S430-Y, the electronic device 100 may identify combination of the fifth attribute value and the sixth attribute value as candidate combination for the relevant attribute value in operation S440.

The electronic device 100 may identify a combination having the highest similarity between the second test value and the first attribute value corresponding to the combination among the candidate combinations including the combination of the fifth attribute value and the sixth attribute value, and may identify attribute values included in the identified combination as a relevant attribute value.

The electronic device 100 may identify whether the similarity between the first attribute value and the second test value corresponding to a combination of the fifth attribute value and the sixth attribute value among the identified candidate combinations is the highest in operation S450.

As a result of identification, if the similarity between the first attribute value and the second test value corresponding to the combination of the fifth attribute value and the sixth attribute value is the highest in operation S450-Y, the electronic device 100 may identify the fifth attribute value and the sixth attribute value as a relevant attribute value related to the first attribute value in operation S460. If the similarity between the first attribute value and the second test value corresponding to the combination of the fifth attribute value and the sixth attribute value is not the highest in operation S450-N, the electronic device 100 may not identify the fifth attribute value and the sixth attribute value as a relevant attribute value related to the first attribute value.

The example has been described with respect to a combination including two attribute values of the fifth attribute value and the sixth attribute value, the disclosure is not limited thereto, and the type and number of attribute values input to the second neural network model may be variously selected according to the disclosure. The electronic device 100 may identify the optimal number for relevant attribute values by repeating the test procedure as described above while gradually increasing the number of attribute values including a combination of attribute values.

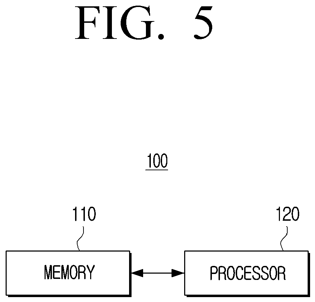

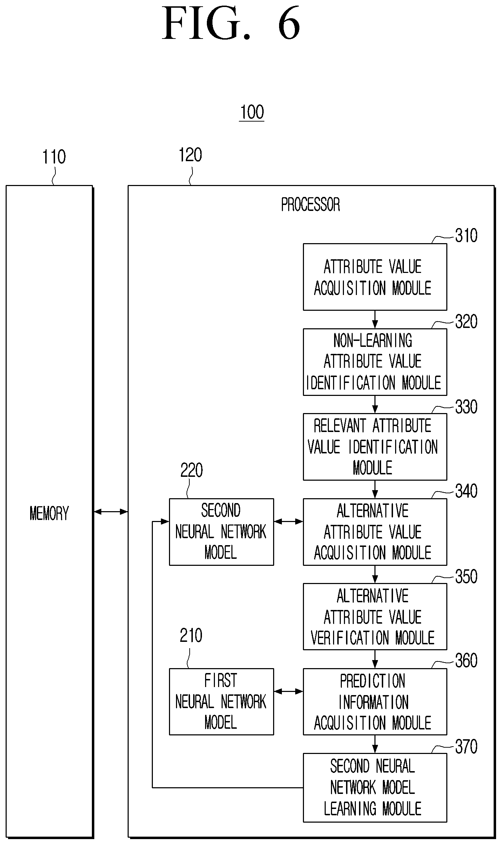

FIG. 5 is a block diagram illustrating an example configuration of the electronic device 100 according to various embodiments. FIG. 6 is a diagram illustrating an example configuration of a neural network model and a plurality of modules according to various embodiments.

As shown in FIG. 5, the electronic device 100 according to an embodiment of the disclosure may include a memory 110 and a processor (e.g., including processing circuitry) 120. Although the configurations shown in FIGS. 5 and 6 are merely examples, a new configuration may be added or some configuration may be omitted in addition to the configuration as shown in FIGS. 5 and 6.

At least one instruction regarding the electronic device 100 may be stored in the memory 110. In addition, an operating system (O/S) for driving the electronic device 100 may be stored in the memory 110. The memory 110 may store various software programs or applications for operating the electronic device 100 according to various embodiments. The memory 110 may include a semiconductor memory such as a flash memory, a magnetic storage medium such as a hard disk, or the like.

For example, the memory 110 may store various software modules for operating the electronic device 100, and the processor 120 may include various processing circuitry and control the operation of the electronic device 100 by executing various software modules that are stored in the memory 110. That is, the memory 110 may be accessed by the processor 120, and may perform reading, recording, modifying, deleting, updating, or the like, of data by the processor 120.

It is understood that the term memory 110 may refer to any volatile or non-volatile memory, a ROM, RAM proximate to or in the processor 120 or a memory card (for example, a micro SD card, a memory stick) mounted to the electronic device 100.

In various embodiments according to the disclosure, the memory 110 may store information about a first neural network model 210, information about a second neural network model 220, learning data for the first neural network model 210, learning data for the second neural network model 220, information on a plurality of modules according to the disclosure, and the like. The memory 110 may store information on a plurality of attribute values, information of a label corresponding to the plurality of attribute values, prediction information obtained through the first neural network model 210, information on an attribute value or a test value obtained through the second neural network model 220, information on user feedback, and the like.

Various information necessary in the scope to achieve the purpose of the disclosure may be stored in the memory 110 and the information stored in the memory 110 may be updated as being received from an external device or input by a user.

The processor 120 may include various processing circuitry and controls overall operations of the electronic device 100. For example, the processor 120 is connected to a configuration of the electronic device 100 including the memory 110 as described above, and controls overall operations of the electronic device 100 by executing at least one instruction stored in the memory 110 as described above.

The processor 120 may be implemented in various ways. For example, the processor 120 may be implemented as at least one of an application specific integrated circuit (ASIC), an embedded processor, a microprocessor, a hardware control logic, a hardware finite state machine (FSM), a digital signal processor (DSP), or the like. Further, processor 120 may include at least one of a central processing unit (CPU), a graphic processing unit (GPU), a main processing unit (MPU), or the like.

In various embodiments according to the disclosure, the processor 120 may provide prediction information for the content using a neural network model. When the attribute value to be input to the first neural network model 210 for obtaining prediction information about the content is not used for learning of the first neural network model 210, the processor 120 may generate an attribute value that may replace the attribute value through the second neural network model 220 and input the attribute value to the first neural network model 210, thereby obtaining prediction information about the content. The processor 120 may train the second neural network model based on the obtained prediction information.

The operation of the processor 120 for implementing various embodiments according to the disclosure may be implemented through the first neural network model 210, the second neural network model 220, and a plurality of modules.

The first neural network model 210, the second neural network model 220, and the plurality of modules according to the disclosure may be stored in the memory 110, and the processor 120 may access the memory 110 to load the data associated with the first neural network model 210, the second neural network model 220, and the plurality of modules into the memory 110 (or buffer) inside the processor 120, and then may perform various embodiments according to the disclosure using the first neural network model 210, the second neural network model 220, and the plurality of modules. However, according to the disclosure, at least one of the first neural network model 210, the second neural network model 220, and the plurality of modules may, for example, and without limitation, be implemented in hardware to be included in the processor 120 in the form of a system on chip.

Various embodiments of the disclosure using the first neural network model 210 and the second neural network model 220 have been described with reference to FIGS. 1 to 4, so a duplicate description for the same description may not be repeated here and operation of a plurality of modules according to the disclosure will be described.

An attribute value acquisition module 310 may refer, for example, to a module capable of obtaining a plurality of attribute values for content. A plurality of attribute values may be obtained based on user input entered into the electronic device 100, or may be obtained based on information received through an external device.

A non-learning attribute value identification module 320 may refer, for example, to a module capable of identifying an attribute value that is not used for learning of the first neural network model 210 among a plurality of attribute values. The term "non-learning attribute value" corresponds to the term "first attribute value" as set forth in the description of FIGS. 1 and 2. When a plurality of attribute values are input from the attribute value acquisition module 310, the non-learning attribute value identification module 320 may identify an attribute value not included in the learning data for learning of the first neural network model 210 or an attribute value that is included in learning data for learning of the first neural network model 210 or having a small frequency, among the plurality of attribute values.

The relevant attribute value identification module 330 may refer, for example, to a module capable of identifying relevant attribute values related to non-learning attribute values. When information on the non-learning attribute value is input from the non-learning attribute value identification module 320, the relevant attribute value identification module 330 may identify an attribute value having a high relevance with a non-learning attribute value among attribute values representing an attribute of a type that is different from the non-learning attribute value.

According to an embodiment, the electronic device 100 may identify at least one relevant attribute value associated with a first attribute value among the plurality of attribute values based on at least one of information on a correlation between a plurality of attribute values and information on a distribution of each of the plurality of attribute values.

According to an embodiment, the electronic device 100 may identify at least one relevant attribute value related to the first attribute value by performing a test process for the plurality of attribute values using the second neural network model 220. Since the test procedure according to the disclosure has been described above with reference to FIGS. 3 and 4, a detailed description thereof may not be repeated here.

The alternative value acquisition module 340 may refer, for example, to a module capable of obtaining an alternative attribute value for replacing a non-learning attribute value using the second neural network model 220. The term "alternative attribute value" may correspond to the term "second attribute value" as set forth in the description of FIGS. 1 and 2. When the information on the relevant attribute value identified from the relevant attribute value module is input, the alternative attribute value acquisition module 340 may input an attribute value related to the second neural network model 220 to obtain an alternative attribute value for replacing the non-learning attribute value.

The alternative attribute value verification module 350 may refer, for example, to a module capable of verifying whether the alternative attribute value obtained through the second neural network model 220 is suitable for replacing the first attribute value. If the alternative attribute value is input from the alternative attribute value acquisition module 340, the alternative attribute value verification module 350 may verify whether the alternative attribute value is suitable for replacing the first attribute value based on identifying whether the similarity between the alternative attribute value and the non-learning attribute value is greater than or equal to a predetermined threshold value.

A prediction information acquisition module 360 may refer, for example, to a module capable of obtaining prediction information for the content by inputting attribute values including the verified alternative attribute value to the first neural network model 210. When information on the alternative attribute value verified by the alternative attribute value verification module 350 is input, the prediction information acquisition module 360 may input one or more attribute values other than a non-learning attribute value among the plurality of attribute values to the first neural network model 210 to obtain prediction information for the content.

The second neural network model learning module 370 may refer, for example, to a module capable of training the second neural network model 220 based on prediction information obtained through the first neural network model 210. The second neural network model 370 may obtain a loss value by comprising the prediction information obtained through the first neural network model with label information corresponding to the plurality of attribute values and may train the second neural network model 220 based on the loss value.

Training of the first neural network model 210 may be stopped while the second neural network model 220 is being trained. The weights of the first neural network model 210 may be locked prior to initiating the learning of the second neural network model 220, and changing the performance of the trained first neural network model 210 may be prevented and/or reduced by the attribute value generated by the second neural network model 220.

It has been described that the prediction information may be obtained by inputting an alternative attribute value generated through the second neural network model to the first neural network model and the second neural network model may be trained based on the prediction information, but according to an embodiment, the second neural network model may be trained based on a loss value according to the difference between the prediction information and the label information along with a loss value according to a difference between the alternative attribute value generated through the second neural network model and a non-learning attribute value.

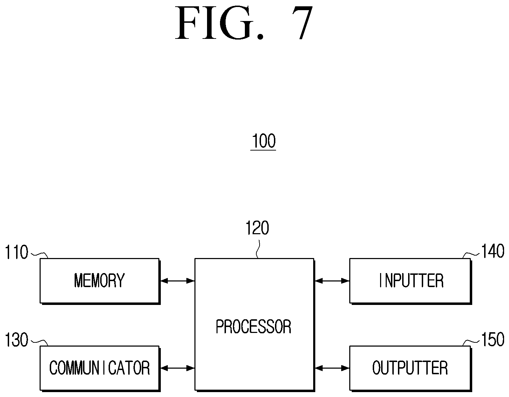

FIG. 7 is a block diagram illustrating an example configuration of the electronic device 100 according to various embodiments.

As illustrated in FIG. 7, the electronic device 100 according to the disclosure may further include a communicator (e.g., including communication circuitry) 130, an inputter (e.g., including input circuitry) 140, and an outputter (e.g., including output circuitry) 150 in addition to the memory 110 and the processor 120. Various embodiments may be further added within a scope to achieve the purpose of the disclosure.

The communicator 130 may include various communication circuitry and may perform communication with an external device. The processor 120 may receive various data or information from an external device connected through the communicator 130, and may transmit various data or information to an external device.

The communicator 130 may include at least one of a Wi-Fi module, a Bluetooth module, a wireless communication module, and a near field communication (NFC) module. To be specific, the Wi-Fi module may communicate by a Wi-Fi method and the Bluetooth module may communicate by a Bluetooth method. When using the Wi-Fi module or the Bluetooth module, various connection information such as service set identifier (SSID) may be transmitted and received for communication connection and then various information may be transmitted and received.

The wireless communication module may communicate according to various communication specifications such as IEEE, Zigbee, 3rd generation (3G), 3rd generation partnership project (3GPP), long term evolution (LTE), 5th generation (5G), or the like. The NFC module may communicate by the NFC method using a 13.56MHz band among various RF-ID frequency bands such as 135kHz, 13.56MHz, 433MHz, 860~960MHz, 2.45GHz, or the like.

In various embodiments according to the disclosure, the processor 120 may receive various information such as information on the first neural network model 210, information on the second neural network model 220, learning data for the first neural network model 210, learning data for the first neural network model 210, information on the first neural network model 210, information on the second neural network model 220, information on the second neural network model 220, information on the plurality of attribute values, and the like. For example, when learning data for the first neural network model 210 or learning data for the second neural network model 220 is received from an external device through the communicator 130, the processor 120 may re-train the neural network model based on the received learning data.

The processor 120 may control the communicator 130 to transmit the prediction information obtained through the first neural network model 210 to the user terminal, and may control the communicator 130 to transmit information on the alternative attribute value obtained through the second neural network model 220 to the external server.

The inputter 140 includes various input circuitry, and the processor 120 may receive a user command for controlling the operation of the electronic device 100 through the inputter 140. The inputter 140 may include a microphone, a camera (not shown), and a remote control signal receiving unit (not shown). The inputter 140 may be implemented as a touch screen in a form included in the display. In particular, a microphone may receive a voice signal and convert the received speech signal to an electrical signal.

The output interface (e.g., outputter) 150 includes various output circuitry and may output various functions that the electronic device 100 may perform through the output interface 150. The output interface 150 may include at least one of a display, a speaker, and an indicator.

The display may output image data under the control of the processor 120. For example, the display may output an image pre-stored in the memory 110 under the control of the processor 120. For example, the display according to an embodiment may display a user interface stored in the memory 110. The display may be implemented as a liquid crystal display panel (LCD), organic light emitting diode (OLED) display, or the like, and the display may be implemented as a flexible display, a transparent display, or the like, according to use cases. The display 141 according to the disclosure is not limited to a specific type.

The speaker may output audio data by the control of the processor 120, and an indicator may be lit by the control of the processor 120.

In various embodiments according to the disclosure, the processor 120 may control the outputter 150 to provide prediction information. The processor 120 may display an image or text corresponding to the prediction information on the display, and may output sound corresponding to the prediction information through the speaker.

After the prediction information is provided, the processor 120 may receive user feedback for the prediction information via the inputter 140. The processor 120 may receive a user's positive feedback or negative feedback for the prediction information based on user voice received via a user's touch input or microphone for a display (touch display).

When the user feedback is received, the processor 120 may increase the score for the prediction information when the user's positive feedback is received and may decrease the score for the prediction information when negative feedback of the user is received. The processor 120 may train the second neural network model 220 based on the received user feedback. Specifically, the processor 120 may train the second neural network model 220 based on the score reflecting the feedback of the user.

The controlling method/controlling process of the electronic device 100 according to the disclosure may be implemented as a program and provided to the electronic device 100. For example, a program including the controlling method of the electronic device 100 may be stored in a non-transitory computer readable medium and provided.

In a non-transitory computer-readable recording medium having recorded thereon a program for executing a method of controlling the electronic device 100, the method of the electronic device 100 may include the memory 110 and the processor 120 configured to obtain prediction information on the content by inputting at least one attribute for content to the first neural network model 210, and the processor 120 may, based on obtaining a plurality of attribute values for the content, identify a first attribute value among the plurality of attribute values not used for the learning of the first neural network model 210, obtain a second attribute value corresponding to the first attribute value by inputting, to the second neural network model 220, at least one relevant attribute value related to the first attribute value among the plurality of attribute values, based on similarity between the first attribute value and the second attribute value being greater than or equal to a first threshold value, obtain prediction information for the content by inputting one or more attribute values other than the first attribute value among the plurality of values and the second attribute value to the first neural network model 210, and train the second neural network model 220 based on the obtained prediction information.

Although described briefly with respect to a computer-readable recording medium including a method for controlling the electronic device 100 and a program for executing the control method of the electronic device 100, the electronic device 100 may be applied to a computer-readable recording medium including a program for executing the control method of the electronic device 100, and a program for executing the control method of the electronic device 100.

A function associated with the first neural network model 210 and the second neural network model 220 may be performed through the memory 110 and the processor 120.

The processor 120 may include one or a plurality of processors. The one or a plurality of processors 120 may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU).

The one or a plurality of processors 120 control the processing of the input data in accordance with a predefined operating rule or artificial intelligence (AI) model stored in the non-volatile memory and the volatile memory. The predefined operating rule or artificial intelligence model is provided through training or learning.

Being provided through learning may refer, for example, to, by applying a learning algorithm to a plurality of learning data, a predefined operating rule or AI model of a desired characteristic being made. The learning may be performed in a device itself in which AI according to an embodiment is performed, and/or may be implemented through a separate server/system.

The AI model may include a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm may refer, for example, to a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

The instructions may include a code generated by a compiler or a code executable by an interpreter. A machine-readable storage medium may be provided in the form of a non-transitory storage medium. Herein, the "non-transitory" may refer, for example, to a storage medium that may not include a signal (e.g., electromagnetic wave) but is tangible, and does not distinguish the configuration in which a data is semi-permanently stored in a storage medium from the configuration in which a data is temporarily stored in a storage medium.

According to various embodiments, a method disclosed herein may be provided in software of a computer program product. A computer program product may be traded between a seller and a purchaser as a commodity. A computer program product may be distributed in the form of a machine readable storage medium (e.g., compact disc read only memory (CD-ROM)) or distributed online through an application store (e.g., PlayStore 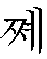 ) or distributed (e.g., download or upload) online between two user devices (e.g., smartphones) directly. In the case of on-line distribution, at least a portion of the computer program product (e.g., a downloadable app) may be stored temporarily or at least temporarily in a storage medium such as a manufacturer's server, a server in an application store, or a memory in a relay server.

Each of the components (for example, a module or a program) according to one or more embodiments may include one or a plurality of objects, and some subcomponents of the subcomponents described above may be omitted, or other subcomponents may be further included in the embodiments. Alternatively or additionally, some components (e.g., modules or programs) may be integrated into one entity to perform the same or similar functions performed by each respective component prior to integration.

Operations performed by a module, program, or other component, in accordance with embodiments, may be performed sequentially, in a parallel, repetitive, or heuristic manner, or at least some operations may be performed in a different order, omitted, or other operations may be added.

The term "unit" or "module" used in the disclosure includes units including hardware, software, or firmware, or any combination thereof, and is used interchangeably with terms such as, for example, logic, logic blocks, parts, or circuits. A "unit" or "module" may be an integrally constructed component or a minimum unit or part thereof that performs one or more functions. For example, the module may be configured as an application-specific integrated circuit (ASIC).

Meanwhile, various embodiments of the disclosure may be implemented in software, including instructions stored on machine-readable storage media readable by a machine (e.g., a computer). An apparatus may call instructions from the storage medium, and execute the called instruction, including an electronic apparatus (for example, electronic device 100) according to the disclosed embodiments.

When the instructions are executed by a processor, the processor may perform a function corresponding to the instructions directly or using other components under the control of the processor. The instructions may include a code generated by a compiler or a code executable by an interpreter.

While the disclosure has been illustrated and described with reference to various example embodiments thereof, it will be understood that the various example embodiments are intended to be illustrative, not limiting. It will be further understood by those skilled in the art that various changes in form and detail may be made without departing from the true spirit and full scope of the disclosure including the appended claims and their equivalents. It will also be understood that any of the embodiment(s) described herein may be used in conjunction with any other embodiment(s) described herein.

## Claims

1. An electronic device comprising:
a memory; and
a processor configured to obtain prediction information on the content by inputting at least one attribute for content to a first neural network model,
wherein the processor is further configured to:
based on obtaining a plurality of attribute values for the content, identify a first attribute value among the plurality of attribute values,
obtain a second attribute value corresponding to the first attribute value by inputting, to a second neural network model, at least one relevant attribute value related to the first attribute value among the plurality of attribute values,
based on similarity between the first attribute value and the second attribute value being greater than or equal to a first threshold value, obtain prediction information for the content by inputting one or more attribute values other than the first attribute value among the plurality of values and the second attribute value to the first neural network model, and
train the second neural network model based on the obtained prediction information.

2. The electronic device of claim 1, wherein the processor is further configured to:
obtain a loss value comprising the prediction information obtained through the first neural network model and label information corresponding to the plurality of attribute values, and
train the second neural network model based on the loss value, and
wherein training of the first neural network model is stopped while the second neural network model is being trained.

3. The electronic device of claim 1, wherein the processor is further configured to, based on similarity between the first attribute value and the second attribute value being less than the first threshold value, obtain prediction information for the content by inputting the plurality of attribute values including the first attribute value to the first neural network model.

4. The electronic device of claim 1, wherein the processor is further configured to, based on at least one of information about a correlation between the plurality of attribute values and information about distribution of each of the plurality of attribute values, identify the at least one relevant attribute value related to the first attribute value among the plurality of attribute values.

5. The electronic device of claim 1, wherein the processor is further configured to:
obtain first test values corresponding to the first attribute value by inputting, to the second neural network model, each of remaining attribute values other than the first attribute value among the plurality of attribute values,
identify first test values having similarity that is greater than a specified second threshold value among the first test values,
identify attribute values corresponding to first test values having similarity with the first attribute value greater than or equal to a specified second threshold value as candidate attribute values to identify the relevant attribute value, and
identify the at least one relevant attribute value related to the first attribute value based on the identified candidate attribute values.

6. The electronic device of claim 5, wherein the processor is further configured to:
obtain second test values corresponding to the first attribute value by inputting, to the second neural network model, each of the combinations of the identified candidate attribute values,
identify second test values having similarity with the first attribute value greater than a specified third threshold value among the second test values,
identify combinations corresponding to second test values having similarity with the first attribute value greater than or equal to a specified third threshold value as candidate attribute values to identify the relevant attribute value, and
identify attribute values included in a combination in which similarity between the second test values and the first attribute value is the highest among the identified candidate combinations as the at least one relevant attribute value related to the first attribute value.

7. The electronic device of claim 1, wherein the processor is further configured to:
based on obtaining the plurality of attribute values for the content, identify the first attribute value and the third attribute value among the plurality of attribute values,
obtain a fourth attribute value corresponding to the third attribute value by inputting at least one relevant attribute value related to the third attribute value, among the plurality of attribute values, to the second neural network model, and
based on similarity between the third attribute value and the fourth attribute value being greater than or equal to a specified fourth threshold value, obtain prediction information for the content by inputting one or more attribute values other than the first attribute value and the third attribute value among the plurality of attribute values, the second attribute value, and the fourth attribute value to the first neural network model.

8. The electronic device of claim 1, further comprising:
an inputter comprising input circuitry; and
an outputter comprising output circuitry;
wherein the processor is further configured to:
control the outputter to provide the obtained prediction information,
receive feedback for the prediction information through the inputter, and
train the second neural network model based on the received feedback.

9. The electronic device of claim 1, wherein the first attribute value includes an attribute value not included in learning data for learning of the first neural network or an attribute value having frequency included in the learning data less than a specified fifth threshold value.

10. A method of controlling an electronic device, the method comprising:
based on obtaining a plurality of attribute values for content, identifying a first attribute value among the plurality of attribute values;
obtaining a second attribute value corresponding to the first attribute value by inputting, to a second neural network model, at least one relevant attribute value related to the first attribute value among the plurality of attribute values;
based on similarity between the first attribute value and the second attribute value being greater than or equal to a first threshold value, obtaining prediction information for the content by inputting one or more attribute values other than the first attribute value among the plurality of values and the second attribute value to the first neural network model; and
training the second neural network model based on the obtained prediction information.

11. The method of claim 10, wherein the training the second neural network model comprises:
obtaining a loss value comprising the prediction information obtained through the first neural network model and label information corresponding to the plurality of attribute values; and
training the second neural network model based on the loss value,
wherein training of the first neural network model is stopped while the second neural network model is being trained.

12. The method of claim 10, wherein the obtaining prediction information for the content comprises:
based on similarity between the first attribute value and the second attribute value being less than the first threshold value, obtaining prediction information for the content by inputting the plurality of attribute values including the first attribute value to the first neural network model.

13. The method of claim 10, wherein the obtaining a second attribute value corresponding to the first attribute comprises:
based on at least one of information about a correlation between the plurality of attribute values and information about distribution of each of the plurality of attribute values, identifying the at least one relevant attribute value related to the first attribute value among the plurality of attribute values.

14. The method of claim 10, wherein the identifying the at least one relevant attribute value comprises:
obtaining first test values corresponding to the first attribute value by inputting, to the second neural network model, each of remaining attribute values other than the first attribute value among the plurality of attribute values;
identifying first test values having similarity that is greater than a specified second threshold value among the first test values;
identifying attribute values corresponding to first test values having similarity with the first attribute value greater than or equal to a specified second threshold value as candidate attribute values to identify the relevant attribute value; and
identifying the at least one relevant attribute value related to the first attribute value based on the identified candidate attribute values.

15. The method of claim 14, wherein the identifying the at least one relevant attribute value comprises:
obtaining second test values corresponding to the first attribute value by inputting, to the second neural network model, each of the combinations of the identified candidate attribute values;
identifying second test values having similarity with the first attribute value greater than a specified third threshold value among the second test values;
identifying combinations corresponding to second test values having similarity with the first attribute value greater than or equal to a specified third threshold value as candidate attribute values to identify the relevant attribute value; and
identifying attribute values included in a combination in which similarity between the second test values and the first attribute value is the highest among the identified candidate combinations as the at least one relevant attribute value related to the first attribute value.
